# EUROPEAN PATENT SPECIFICATION

(11) **EP 0 604 906 B1**
(45) Date of publication and mention of the grant of the patent: **26.05.1999**
(21) Application number: 93120784.9
(22) Date of filing: 23.12.1993
(51) Int. Cl.: A01N 25/14, A01N 33/18, A01N 41/06

(54) **Water dispersible granular herbicidal compositions**
Körnige wasserdispergierbare herbizide Zusammensetzungen
Compositions herbicides granulaires, dispersibles dans l'eau

(30) Priority: 23.12.1992 US 996412
(43) Date of publication of application: 06.07.1994
(73) Proprietor: AMERICAN CYANAMID COMPANY, Wayne New Jersey 07470 (US)
(72) Inventor: Kimler, Joseph, Yardville, New Jersey 08620 (US); Kubisch, Robert, Martinsville, New Jersey 08836 (US)
(74) Representative: Wächtershäuser, Günter, Prof. Dr.

(56) References cited:
- EP-A- 0 112 438
- US-A- 5 019 155
- CHEMICAL PATENTS INDEX, BASIC ABSTRACTS JOURNAL Section Ch, Week 8637, 5 November 1986 Derwent Publications Ltd., London, GB; Class C03, AN 239158 & CA-A-1 209 363 (BASF WYANDOTTE CORP) 12 August 1986
- CHEMICAL PATENTS INDEX, DOCUMENTATION ABSTRACTS JOURNAL Section Ch, Week 8915, 7 June 1989 Derwent Publications Ltd., London, GB; Class C03, AN 110588 & JP-A-1 056 602 (SHIONOGI KK) 3 March 1989

## Description

Water dispersible granules (WDG's) are becoming increasingly important in the formulation of agricultural compositions because they are more safely handled and environmentally friendly than other commonly used formulations. For example, chemical spills of WDG's are easily cleaned, no toxic solvents are present in the WDG formulation, and it is possible to package WDG's in water soluble packaging, thus reducing user exposure.

Dinitroaniline herbicides, which are useful for the selective control of certain grasses and broadleaf weeds, have typically been formulated as emulsifiable concentrates, flowables, wettable powders or the like, which are diluted in a tank mix. These formulations, however, require handling, measuring and mixing prior to application to the soil.

Conventional dispersible granular compositions containing dinitroaniline herbicides have been difficult to prepare. Such herbicides, which are solid at room temperature but have melting points below 100°C , have a tendency to cake, fuse or lump up when stored at or exposed to elevated temperatures, due to the excessive softening or partial melting of the herbicides. Moreover, they are often dusty and may cause staining.

The imidazolinone class of herbicides, such as imazaquin, imazethapyr, imazamethapyr and imazamethabenz-methyl, are highly desirable for the selective control of a wide variety of grass and broadleaf weeds in the presence of agricultural crops at exceptionally low rates of application. At present, imidazolinone herbicides are commercially available mainly in the form of liquid compositions.

The present invention relates to water dispersible granular compositions as defined in claim 1 comprising a dinitroaniline herbicide, alone, or in combination with an imidazolinone herbicide, and a dispersion enhancing agent, and to a process for the preparation of said compositions as defined in claim 7. Such compositions are storage stable and contain desirable dispersion properties.

This invention provides a novel formulation of useful dinitroaniline herbicides, alone, or in combination with imidazolinone herbicides, as water dispersible granular compositions (WDG's), which offer ease of handling coupled with reduced dusting, and other environmentally desirable characteristics.

A primary concern when formulating WDG's is that the granules disperse in an acceptable amount of time. Of the conventional carriers typically considered, bentonite was among the least desirable with which to formulate a WDG because the granules are difficult to disperse. However, it has now been found that extruding the WDG with a dispersion enhancing agent permits the use of bentonite because of its compatibility with low-melt, active ingredients, such as dinitroaniline compounds. Advantageously, the use of bentonite minimizes the loss of the physical performance attributes of low-melt, active ingredients, such as dinitroanilines, compared to most other typical carriers. At the same time, such a stable formulation permits the coformulation of a dinitroaniline herbicide and an imidazolinone herbicide, thereby benefiting from the desirable and complementary properties of each active ingredient. According to the invention, the term "dispersion enhancing agent" means a chemical entity that facilitates the swelling and dispersing of the bentonite or other suitable carrier component of the WDG composition of the invention. Such dispersion enhancing agents are selected from bases, such as alkali metal hydroxides and amines, and water swellable polymers, including cellulosic materials.

It has now been found that extrudable granulated herbicidal compositions as defined by claim 1 comprising a dinitroaniline herbicide, alone, or in combination with and an imidazolinone herbicide, and a dispersion enhancing agent, can be formulated to possess improved suspendability and dispersibility. Such a discovery takes advantage of the beneficial properties of many components while minimizing potential incompatibility.

In a preferred embodiment, the present invention relates to water-dispersible granular compositions comprising a dinitroaniline herbicide of structural formula (I) 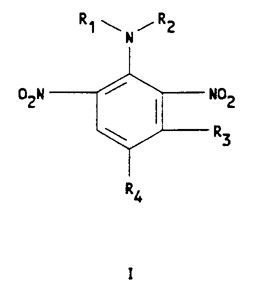 wherein R₁ is selected from H, C₁-C₄ straight or branched-chain alkyl, C₃-C₄alkenyl and C₃-C₄alkynyl; R₂ is selected from C₁-C₆ straight or branched-chain alkyl and optionally substituted with Cl or OCH₃, C₃-C₄ alkenyl, and C₃-C₄alkynyl; R₃ is H, CH₃ or CH₂OCH₃; and R₄ is C₁-C₄ alkyl, CF₃ or Cl, alone, or in combination with an imidazolinone herbicide. The imidazolinone herbicide may be any of the imidazolinone compounds known in the art such as those described in United States patents 4,798,619; 4,772,311; 5,039,333; 5,108,485; and in EP 254,951 and EP 322,616. Preferably, the imidazolinone herbicide is selected from imazaquin, imazapyr, imazethapyr and imazamethapyr. A more preferred imidazolinone herbicide is imazaquin. The present invention also relates according to claim 7 to methods of producing WDG compositions containing such compounds.

More preferred formula (I) herbicides for use in the compositions of the invention include pendimethalin (N-(1-ethylpropyl)-2,6-dinitro-3,4-xylidine) and trifluralin (N,N-dipropyl-2,6-dinitro-4-trifluoromethylaniline), as well as benfluralin, isopropalin, ethalfluralin, ryzelan and the like, alone, or in combination. Pendimethalin and trifluralin are most preferred.

In general, WDG's containing high concentrations of between about 20% and 90%, preferably between about 30% and 70% by weight, of low-melting dinitroanilines, such as pendimethalin and trifluralin, optionally in combination with about 1% to 20%, preferably 5% to 15% by weight of an imidazolinone herbicide, and a carrier combination of a montmorillonite carrier, such as bentonite, and a kaolinate carrier, may be prepared according to claim 1 in a controlled manner by extrusion in the presence of a dispersion enhancing agent selected from the group consisting of a base and a water swellable polymer, to yield essentially dust-free and uniformly granular WDG's possessing good dispersibility. Compositions containing such high concentrations of active ingredients, particularly when used in combination, provide the environmental and commercial advantage of using less material to obtain the desired result.

The finding that bentonite clay is suitable for preparing heat-stable, water dispersible granular compositions containing high concentrations of low melting materials is unexpected. It is contemplated that the incorporation of between 0.5% to 20% by weight, preferably between 1% to 10% by weight, of a base, such as sodium hydroxide, potassium hydroxide or isopropyl amine, or water-swellable polymers, for example, heterocyclic polymers such as Agrimer® XLF (2-pyrolidinone, 1-ethenyl, homopolymer, or PVP), N-vinyl-2-pyrrolidone (NVP), a cellulosic material, such as croscarmellose sodium (e.g., Ac-Di-Sol®, FMC Corporation), microcrystalline cellulose (e.g., Lattice® NTC-80) , or other commercially available polyhydroxy polymers, incorporated into the WDG formulation causes the bentonite or other suitable hydrous carrier to swell upon contact with the water. Advantageously, this swelling permits the WDG to disperse more quickly.

Carriers suitable for use in the preparation of the water dispersible granular compositions of the invention are carrier combinations of a montmorillonite carrier and a kaolinate carrier Commercially available, naturally occurring swelling clays include VOLCLAY® (Wyoming Bentonites), VEEGUM®, or other naturally occurring swelling clays which contain the same montmorillonite unit structure and properties.

The wetting agents for use in the preparation of the WDG compositions of the invention are selected from the group consisting of sodium N-methyl-N-oleyoyltaurate (Igepon® T-77), octylphenoxy polyethoxy ethanol, nonylphenoxy polyethoxy ethanol, sodium dioctyl sulfosuccinate, sodium dodecyl benzyl sulfonate, sodium lauryl sulfonate, and mixtures thereof. The suspension agents are selected from the group consisting of sodium lignosulfonate, alkyl naphthalene sulfonates, the sodium salt of a naphthalene sulfuric acid-formaldehyde condensate (Morwet® D-425 or Lowmar® PW), and mixtures thereof (Morwet® EFW). Suitable antifoaming agents include conventional detergents such as sodium tallowate (Foamaster Soap L®) and the like. Suitable flow agents include conventional agents such as fumed silica, calcium silicate (Micro-Cel® E), and the like, or mixtures thereof.

The WDG compositions of the invention comprise 20 to 90% by weight (preferably 30-70%) of a dinitroaniline compound, preferably a dinitroaniline compound of formula (I), optionally 1% to 20%, preferably 5% to 15% by weight, of an imidazolinone herbicide, preferably selected from the group consisting of imazaquin, imazethapyr, imazamethapyr and imazapyr, admixed with from 5.0 to 25.0% by weight of a carrier combination of a montmorillonite carrier and a kaolinate carrier, 1.0-7.5% by weight of one or more wetting agents, 2-10% by weight of one or more suspension agents, and 0.5-20% by weight of one or more dispersion enhancing agents. More preferably, the WDG compositions of the invention also include up to 1% by weight of one or more antifoaming agents, and up to 7.5% by weight of one or more flow agents to facilitate the extrusion process.

The hardness, sorptivity, particle size and apparent density of the WDG composition can be adjusted by varying or combining the type(s) of clay, the type(s) of surfactants and/or wetting agents, and mixtures thereof, which are commonly employed in agricultural formulations. Other conventional formulating agents, such as disintegrating aids or thickening agents, may also be added to the WDG compositions of the invention while maintaining the desirable properties described above.

In order to prepare the WDG compositions of the invention, the appropriate dinitroaniline, and optionally imidazolinone, technical material is passed through a pin mill. The milled technical is then blended with the wetting agents, the suspension agents, and the carriers, and optionally, the anitfoaming agents and the flow agents. The blended material is milled in an air classifier mill, preferably under liquid nitrogen or other unreactive refrigerant source sufficient to cool the mill. The milled material is then mixed with water (10-15% of total batch size) and the dispersion enhancing agents, and extruded through a conventional LUWA bench top basket extruder, for example, one having about a 0.6 mm to 1.2 mm aperture. The extruded granules are allowed to dry overnight in a hood until the residual moisture is reduced to about 1-3%. The granules are then sieved through a #16 and #40 mesh screen and collected.

Many variations of this invention will occur to those skilled in the art in light of the above, detailed description. For example, combinations of water swellable polymers may be used as the dispersion enhancing agent. All such obvious variations are within the full intended scope of the appended claims.

The present invention is further illustrated by the following non-limiting examples.

### EXAMPLES

### Experimental Procedures

The preparation of WDG compositions of the invention for comparison testing with prior art compositions involved (a) milling about 20% to 90% by weight of a dinitroaniline herbicide, optionally with about 1% to 20% by weight of an imidazolinone herbicide; (b) blending the milled herbicide with about 1% to 7.5% by weight of one or more wetting agents, about 2% to 10% by weight of one or more suspension agents and about 5.0 to 25.0% by weight of one or more carriers; (c) milling the blend produced by step (b), preferrably in the presence of an unreactive refrigerant sufficient to cool the mill; (d) mixing about 0.5% to 20% by weight of one or more dispersion enhancing agents with water, and the milled blend produced by step (c); (e) extruding the milled blend into granular compositions; and (f) drying the extruded granular compositions.

Following the above procedures, the following WDG compositions were prepared and tested. The important physical properties of the WDG compositions of Examples 1-7 (dinitroaniline herbicides alone) and Examples 8-14 (dinitroaniline herbicides in combination with imidazolinone herbicides) are set forth in Examples 15-16.

| EXAMPLES 1-7 | | | | | | | |
|---|---|---|---|---|---|---|---|
| Ingredient | (%wt./wt.) | | | | | | |
| | 1* | 2 | 3 | 4 | 5 | 6 | 7* |
| Pendimethalin Tech. (91%) | 66.1 | 62.7 | 60.0 | 56.7 | 66.0 | 66.0 | 66.3 |
| Calcium Silicate | 5.0 | 4.7 | 4.5 | 4.2 | 5.0 | 5.0 | 5.0 |
| Sodium-N-Methyl-N-Oleoyltaurate | 2.5 | 2.4 | 2.2 | 2.1 | 2.5 | 2.5 | 2.5 |
| Sodium Naphthalene Formaldehyde Sulfonate, concensate | 5.0 | 9.7 | 9.5 | 9.2 | 5.0 | 5.0 | 5.0 |
| Bentonite Clay | 16.0 | 15.0 | 14.4 | 13.8 | 15.7 | 15.7 | --- |
| Kaolin Clay | 4.3 | 4.0 | 4.0 | 3.6 | 4.3 | 4.3 | 20.7 |
| Sodium Tallowate | 0.5 | 0.5 | 0.4 | 0.4 | 0.5 | 0.5 | 0.5 |
| 2-Pyrrolidinone, 1-Ethenyl, Homopolymer | --- | 1.0 | 5.0 | 10.0 | --- | --- | --- |
| Sodium Hydroxide | --- | --- | --- | --- | 1.0 | --- | --- |
| Sodium Chloride | --- | --- | --- | --- | --- | 1.0 | --- |
| | $\overline{\text{100}}$% | $\overline{\text{100}}$% | $\overline{\text{100}}$% | $\overline{\text{100}}$% | $\overline{\text{100}}$% | $\overline{\text{100}}$% | $\overline{\text{100}}$% |

| | | | | | | | |
|---|---|---|---|---|---|---|---|
| * not within the scope of the present invention | | | | | | | |

| EXAMPLES 8-14 | | | | | | | |
|---|---|---|---|---|---|---|---|
| Ingredient | (%wt./wt.) | | | | | | |
| | 8* | 9 | 10 | 11 | 12 | 13 | 14 |
| Pendimethalin Tech. (91%) | 54.1 | 59.2 | 62.7 | 54.1 | 55.5 | 63.4 | 58.2 |
| Imazaquin Tech. (97.5 %) | 8.9 | 9.0 | --- | 8.9 | 9.1 | --- | 9.2 |
| Imazethapyr (97.5%) | --- | --- | 4.5 | --- | --- | 4.0 | --- |
| Calcium Silicate | 4.0 | 4.4 | 4.7 | 4.0 | 4.1 | 4.1 | 4.0 |
| Sodium-N-Methyl-N-Oleoyltaurate | --- | 2.2 | 2.3 | --- | --- | --- | --- |
| Sodium Dioctyl Sulfosuccinate | --- | --- | --- | 2.2 | --- | --- | --- |
| Sodium Naphthalene Formaldehyde Sulfonate condensate | 5.9 | 4.4 | 4.7 | 5.9 | --- | 3.0 | 5.1 |
| Sodium Naphthalene Sulfonate/Alkyl Carboxylate blend | --- | --- | --- | --- | --- | 1.0 | 3.2 |
| Bentonite Clay | 21.4 | 14.5 | 15.0 | 21.4 | 12.9 | 15.4 | 13.1 |
| Kaolin Clay | 3.5 | 3.7 | 4.0 | 3.5 | 3.6 | 4.1 | 3.7 |
| Sodium Hydroxide | --- | 2.6 | 2.1 | --- | --- | --- | --- |
| Potassim Phosphate (Tribasic) | --- | --- | --- | --- | 9.1 | --- | 0.8 |
| Croscarmellose Sodium (internally crosslinked Sodium Carboxymethyl Cellulose) | --- | --- | --- | --- | 3.8 | 4.0 | 2.3 |
| Microcrystalline Cellulose | --- | --- | --- | --- | 1.9 | 1.0 | 0.8 |
| | $\overline{\text{100}}$% | $\overline{\text{100}}$% | $\overline{\text{100}}$% | $\overline{\text{100}}$% | $\overline{\text{100}}$% | $\overline{\text{100}}$% | $\overline{\text{100}}$% |

| | | | | | | | |
|---|---|---|---|---|---|---|---|
| * not within the scope of the present invention | | | | | | | |

### EXAMPLE 14

### Evaluation of Dispersibility and Temperature Stability of the Test Compositions

Test compositions are stored at room temperature, 45°C or 50°C for 7 days, or up to 3 months, prior to evaluation. A predetermined amount of test composition, typically 1 gram or quantity sufficient to represent the maximum end use concentration, is added 100 mL of water in a graduated cylinder, which is then quickly stoppered. The cylinder is immediately rotated (inverted) 180°, and, after a 3 second pause, rotated an additional
180°, and held for 3 seconds. The cycle is then repeated. The number of 360° cycles required to completely dissolve/disperse the granules is recorded. The procedure is continued until 30 inversions have been made. The desired quick dispersion of the granules is reflected by the lower number of inversions (Table 1).

**Table 1**

| Dispersibility (# of Inversions) | | | |
|---|---|---|---|
| Example | 7 days @RT | 7 days at 45°C | 7 days @50°C |
| 1 | 18 | 17 | 20 |
| 2 | 18 | 17 | 18 |
| 3 | 14 | 12 | 10 |
| 4 | 13 | 8 | 5 |
| 5 | 12 | 11 | 11 |
| 6 | 5 | 14 | 12 |
| 7 | 22 | 23 | 28 |

| | Initial @RT | 3 months@ 45°C | |
|---|---|---|---|
| 8 | 5 | >30 | |
| 9 | 6 | 14 | |
| 10 | 6 | 6 | |
| 11 | 5 | 24 | |
| 12 | 8 | 12 | |

### EXAMPLE 15

### Evaluation of Suspendibility of Test Composition

Test compositions are stored at room temperature, 45°C or 50°C, for 7 days prior to evaluation. A predetermined amount of test composition is dispersed in a controlled aqueous system and allowed to settle for 30 minutes. An aliquot is taken from center of the suspension and the solids content is measured. The 30 minute reading is compared to, and reported as a percentage of, the presettling value. The desired suspendibility property of the composition is reflected by a higher percentage.

**Table 2**

| Suspendiblity (% Suspended) | | | |
|---|---|---|---|
| Example | 7 days @RT | 7 days at 45°C | 7 days @50°C |
| 1 | 85.6 | 84.9 | 68.2 |
| 2 | 82.3 | 83.8 | 70.3 |
| 3 | 79.2 | 83.0 | 68.6 |
| 4 | 79.7 | 78.2 | 64.7 |
| 5 | 82.2 | 83.5 | 68.8 |
| 6 | 29.6 | -- | -- |
| 7 | 86.9 | 22.2 | 17.8 |

As the results demonstrate, the WDG compositions of the invention possess improved dispersibility and suspendibility compared to the prior art formulations.

## Claims

1. A water dispersible granular composition comprising on a weight to weight basis 20% to 90% of a dinitroaniline herbicide, optionally in combination with 1% to 20% of an imidazolinone herbicide; 5% to 25% of a carrier combination of a montmorillonite carrier and a kaolinate carrier; 1.0% to 7.5% of a wetting agent selected from the group consisting of sodium **N-methyl-N-oleoyltaurate,** octylphenoxy polyethoxy ethanol, nonylphenoxy polyethoxy ethanol, sodium dioctyl sulfosuccinate, sodium dodecyl benzyl sulfonate and sodium lauryl sulfonate and mixtures thereof; 2% to 10% of a suspension agent selected from the group consisting of sodium lignosulfonate, an alkyl naphthalene sulfonate and the sodium salt of a naphthalene sulfuric acid-formaldehyde condensate and mixtures thereof; and 0.5% to 20% of a dispersion enhancing agent selected from the group consisting of a base and a water swellable polymer and mixtures thereof.

2. The water dispersible granular composition according to claim 1 wherein the base is an alkali metal hydroxide.

3. The water dispersible granular composition according to claim 1 wherein the water swellable polymer comprises 2-pyrrolidinone, 1-ethenyl, homopolymer.

4. The water dispersible granular composition according to claim 1 wherein the water swellable polymer comprises cellulosic material.

5. The water dispersible granular composition according to claim 1 wherein the montmorillonite carrier is bentonite clay, and the kaolinate carrier is kaolin clay.

6. The water dispersible granular composition according to claim 1, further comprising up to 1% by weight of an antifoaming agent and up to 7.5 % by weight of a flow agent.

7. A method for the production of a dinitroaniline-containing water dispersible granular composition having improved dispersibility comprising the steps of:
(a) milling 20 % to 90% by weight of a dinitroaniline herbicide, optionally with 1% to 20 % by weight of an imidazolinone herbicide;
(b) blending the milled herbicide combination produced by step (a) with (i) 1% to 7.5 % by weight of a wetting agent selected from the group consisting of sodium **N-methyl-N-oleoyltaurate,** octylphenoxy polyethoxy ethanol, nonylphenoxy polyethoxy ethanol, sodium dioctyl sulfosuccinate, sodium dodecyl benzyl sulfonate and sodium lauryl sulfonate and mixtures thereof; (ii) 2 % to 10% by weight of a suspension agent selected from the group consisting of sodium lignosulfonate, an alkyl naphthalene sulfonate and the sodium salt of a naphthalene sulfuric acid-formaldehyde condensate and mixtures thereof;(iii)
5% to 25 % by weight of a carrier combination of a montmorillonite carrier and a kaolinate carrier;
(c) milling the blend product produced by step (b) in the presence of an unreactive refrigerant sufficient to cool the mill;
(d) mixing 0.5 % to 20 % by weight of a dispersion enhancing agent selected from the group consisting of a base and a water swellable polymer and mixtures thereof with water and the milled blend produced by step (c);
(e) extruding the milled blend into granular compositions; and
(f) drying the extruded granular compositions.

8. The method according to claim 7 wherein step (b) further comprises the addition of up to 1% by weight of an antifoaming agent, and up to 7.5 % by weight of a flow agent.

9. The method according to claim 7 wherein the base is an alkali metal hydroxide, and the water swellable polymer is selected from the group consisting of 2-pyrrolidinone, 1-ethenyl homopolymer and a cellulosic material and mixture thereof.

10. The method according to claim 7 wherein the montmorillonit carrier is bentonite clay, and the kaolinate carrier is kaolin clay.

## Patentansprüche

1. Körnige, in Wasser dispergierbare Zusammensetzung, umfassend auf Gewicht-zu-Gewicht-Basis, 20% bis 90% eines Dinitroanilinherbizids, gegebenenfalls in Kombination mit 1% bis 20% eines Imidazolinonherbizids, 5% bis 25% einer Trägerkombination aus einem Montmorillonitträger und einem Kaolinatträger, 1,0% bis 7,5% eines Netzmittels, ausgewählt aus der Gruppe, bestehend aus Natrium-N-methyl-N-oleoyltaurat, Octylphenoxypolyethoxyethanol, Nonylphenoxypolyethoxyethanol, Natriumdioctylsulfosuccinat, Natriumdodecylbenzylsulfonat und Natriumlaurylsulfonat und Gemischen davon; 2% bis 10% eines Suspensionsmittels, ausgewählt aus der Gruppe, bestehend aus Natriumlignosulfonat, einem Alkylnaphthalinsulfonat und dem Natriumsalz eines Naphthalin-Schwefelsäure-Formaldehyd-Kondensats und Gemischen davon; und 0,5% bis 20% eines die Dispersion steigernden Mittels, ausgewählt aus der Gruppe, bestehend aus einer Base und einem in Wasser quellbaren Polymer und Gemischen davon.

2. Körnige, in Wasser dispergierbare Zusammensetzung nach Anspruch 1, wobei die Base ein Alkalimetallhydroxid ist.

3. Körnige, in Wasser dispergierbare Zusammensetzung nach Anspruch 1, wobei das in Wasser quellbare Polymer 1-Ethenyl-2-pyrrolidinon-Homopolymer umfaßt.

4. Körnige, in Wasser dispergierbare Zusammensetzung nach Anspruch 1, wobei das in Wasser quellbare Polymer Cellulosematerial umfaßt.

5. Körnige, in Wasser dispergierbare Zusammensetzung nach Anspruch 1, wobei der Montmorillonitträger Bentonitton ist und der Kaolinatträger Kaolinton ist.

6. Körnige, in Wasser dispergierbare Zusammensetzung nach Anspruch 1, weiterhin umfassend bis zu 1 Gewichtsprozent eines Antischäumungsmittels und bis zu 7,5 Gewichtsprozent eines Fließmittels.

7. Verfahren zur Herstellung einer körnigen Dinitroanilin-enthaltenden, in Wasser dispergierbaren Zusammensetzung mit verbessertem Dispergiervermögen, umfassend die Schritte von:
(a) Vermahlen von 20% bis 90 Gewichtsprozent eines Dinitroanilinherbizids, gegebenenfalls mit 1% bis 20 Gewichtsprozent eines Imidazolinonherbizids;
(b) Vermischen der in Schritt (a) hergestellten, vermahlenen Herbizidkombination mit (i) 1% bis 7,5 Gewichtsprozent eines Netzmittels, ausgewählt aus der Gruppe, bestehend aus Natrium-N-methyl-N-oleoyltaurat, Octylphenoxypolyethoxyethanol, Nonylphenoxypolyethoxyethanol, Natriumdioctylsulfosuccinat, Natriumdodecylbenzylsulfonat und Natriumlaurylsulfonat und Gemischen davon; (ii) 2% bis 10 Gewichtsprozent eines Suspensionsmittels, ausgewählt aus der Gruppe, bestehend aus Natriumlignosulfonat, einem Alkylnaphthalinsulfonat und dem Natriumsalz eines Naphthalin-Schwefelsäure-Formaldehyd-Kondensats und Gemischen davon; (iii) 5% bis 25 Gewichtsprozent einer Trägerkombination eines Monimorillonitträgers und eines Kaolinatträgers;
(c) Vermahlen des in Schritt (b) hergestellten, gemischten Produkts in Anwesenheit eines nichtreaktiven, die Mühle ausreichend kühlenden Kühlmittels;
(d) Vermischen von 0,5 bis 20 Gewichtsprozent eines die Dispersion steigernden Mittels, ausgewählt aus der Gruppe, bestehend aus einer Base und einem in Wasser quellbaren Polymer und Gemischen davon, mit Wasser und dein in Schritt (c) hergestellten, vermahlenen Gemisch;
(e) Extrudieren des vermahlenen Gemisches zu körnigen Zusammensetzungen; und
(f) Trocknen der extrudierten, körnigen Zusammensetzungen.

8. Verfahren nach Anspruch 7, wobei Schritt (b) weiterhin die Zugabe von bis zu 1 Gewichtsprozent eines Antischäumungsmittels und bis zu 7,5 Gewichtsprozent eines Fließmittels umfaßt.

9. Verfahren nach Anspruch 7, wobei die Base ein Alkalimetallhydroxid ist und das in Wasser quellbare Polymer ausgewählt ist aus der Gruppe, bestehend aus 1-Ethenyl-2-pyrrolidinon-Homopolymer und einem Cellulosematerial und Gemisch davon.

10. Verfahren nach Anspruch 7, wobei der Montmorillonitträger Bentonitton ist und der Kaolinatträger Kaolinton ist.

## Revendications

1. Composition granulaire dispersable dans l'eau comprenant, sur une base pondérale, 20% à 90% d'un herbicide dinitroaniline, éventuellement en combinaison avec 1% à 20% d'un herbicide imidazolinone; 5,0% à 25,0% d'une combinaison de véhicules composée d'un véhicule montmorillonite et d'un véhicule kaolinate; 1,0% à 7,5% d'un agent mouillant choisi dans le groupe constitué par le N-méthyl-N-oléoyltaurate de sodium, l'ocylphénoxypolyéthoxyéthanol, le nonylphénoxypolyéthoxyéthanol, le dioctylsulfosuccinate de sodium, le dodécylbenzylsulfonate de sodium, le laurylsulfonate de sodium et leurs mélanges; 2% à 10% d'un agent de mise en suspension choisi dans le groupe constitué par le lignosulfonate de sodium, un alkylnaphtalènesulfonate et le sel de sodium d'un produit de condensation de l'acide naphtalènesulfurique et du formaldéhyde, et leurs mélanges; et 0,5% à 20% d'un agent renforçant la dispersion choisi dans le groupe constitué par une base et un polymère gonflable dans l'eau, et leurs mélanges.

2. Composition granulaire dispersable dans l'eau selon la revendication 1, dans laquelle la base est un hydroxyde de métal alcalin.

3. Composition granulaire dispersable dans l'eau selon la revendication 1, dans laquelle le polymère gonflable dans l'eau comprend un homopolymère de 1-éthényl-2-pyrrolidinone.

4. Composition granulaire dispersable dans l'eau selon la revendication 1, dans laquelle le polymère gonflable à l'eau comprend une matière cellulosique.

5. Composition granulaire dispersable dans l'eau selon la revendication 1, dans laquelle le véhicule montmorillonite est une argile bentonite et le véhicule kaolinate est une argile de kaolin.

6. Composition granulaire dispersable dans l'eau selon la revendication 1, comprenant en outre jusqu'à 1% en poids d'un agent antimousse et jusqu'à 7,5% en poids d'un agent d'écoulement.

7. Procédé de production d'une composition granulaire dispersable dans l'eau contenant une dinitroaniline, présentant une capacité de distribution améliorée, comprenant les étapes consistant à:
(a) broyer 20% à 90% en poids d'un herbicide dinitroaniline, éventuellement avec 1% à 20% en poids d'un herbicide imidazolinone;
(b) mélanger la combinaison d'herbicides broyée produite dans l'étape (a) avec (i) 1% à 7,5% en poids d'un agent mouillant choisi dans le groupe constitué par le N-méthyl-N-oléoyltaurate de sodium, l'octylphénoxypolyéthoxyéthanol, le nonylphénoxypolyéthoxyéthanol, le dioctylsulfosuccinate de sodium, le dodécylbenzylsulfonate de sodium et le laurylsulfonate de sodium, et leurs mélanges; (ii) 2% à 10% en poids d'un agent de mise en suspension choisi dans le groupe constitué par le lignosulfonate de sodium, un alkylnaphtalènesulfonate et le sel de sodium d'un produit de condensation de l'acide naphtalènesulfurique et du formaldéhyde, et leurs mélanges; (iii) 5% à 25% en poids d'une combinaison de véhicules composée d'un véhicule montmorillonite et d'un véhicule kaolinate;
(c) broyer le mélange produit dans l'étape (b) en présence d'un réfrigérant non réactif suffisant pour refroidir le broyeur;
(d) mélanger 0,5% à 20% en poids d'un agent renforçant la dispersion choisi dans le groupe constitué par une base et un polymère gonflable dans l'eau, et leurs mélanges avec de l'eau et le mélange broyé produit dans l'étape (c);
(e) extruder le mélange broyé en compositions granulaires; et
(f) sécher les compositions granulaires extrudées.

8. Procédé selon la revendication 7, dans lequel l'étape (b) comprend en outre l'addition de jusqu'à 1% en poids d'un agent antimousse et de jusqu'à 7,5% en poids d'un agent d'écoulement.

9. Procédé selon la revendication 7, dans lequel la base est un hydroxyde de métal alcalin et le polymère gonflable dans l'eau est choisi dans le groupe constitué par un homopolymère de 1-éthényl-2-pyrrolidinone et une matière cellulosique, et leurs mélanges.

10. Procédé selon la revendication 7, dans lequel le véhicule montmorillonite est une argile bentonite et le véhicule kaolinate est une argile de kaolin.
